# EUROPÄISCHE PATENTANMELDUNG

(11) **EP 3 029 185 A1**
(43) Veröffentlichungstag der Anmeldung: **08.06.2016**
(21) Anmeldenummer: 15003241.5
(22) Anmeldetag: 13.11.2015
(51) Int. Cl.: D01H 7/86

(54) **MEHRFACHDRAHT-ZWIRNSPINDEL FÜR ZWIRNMASCHINEN**

(30) Priorität: 05.12.2014 DE 102014018039
(71) Anmelder: Saurer Germany GmbH & Co. KG, 42897 Remscheid (DE)
(72) Erfinder: Brenk, Siegfried, 47839 Krefeld (DE); Filz, Ingo, 41747 Viersen (DE); Heinen, Georg, 47803 Krefeld (DE); Schnitzler, Jürgen, 41751 Viersen (DE); Tetzlaff, Georg, 52076 Aachen (DE)
(74) Vertreter: Hamann, Arndt

(57) **Zusammenfassung**

Die Erfindung betrifft eine Mehrfachdraht-Zwirnspindel (1) für Zwirnmaschinen mit einem oberen Rotor (10) und einem unteren Rotor (14), die sich konzentrisch in einander entgegengesetzte Richtungen drehen, wobei einer der Rotoren (10, 14) angetrieben wird und die Bewegung mittels eines Getriebes (20) auf den anderen Rotor (10, 14) übertragen wird.

Erfindungsgemäß erfolgt die Übersetzung der Bewegung zwischen angetriebenem Rotor (10, 14) und abgetriebenem Rotor (10, 14) über mindestens ein Axiallager (27) und mindestens ein Radiallager (26), wobei ein Käfig (25) im Axiallager (27) vorhanden ist, der gegen Rotation gesichert ist.

## Beschreibung

Die Erfindung betrifft eine Mehrfachdraht-Zwirnspindel für Zwirnmaschinen mit einem oberen Rotor und einem unteren Rotor, die sich konzentrisch in einander entgegengesetzte Richtungen drehen, wobei einer der Rotoren angetrieben wird und die Bewegung mittels eines Getriebes auf den anderen Rotor übertragen wird.

Zwirnen ist ein textiler Prozess zur Verbesserung der Garnqualität. Da der einfache Faden hinsichtlich Festigkeit und Gleichmäßigkeit den Anforderungen der Weiterverarbeitung oder des Endprodukts nicht immer genügt, werden zwei oder mehr Fäden miteinander verdreht.

Dabei gibt es zwei verschiedene Vorlagearten, wie die Fäden der Zwirnmaschine zugeführt werden. Entweder sind die Vorlagefäden auf eine Vorlagespule gefacht, oder auf zwei Spulen, die übereinanderstehen, ist jeweils ein Vorlagefaden aufgespult. Zwirn ist dabei als Sammelbegriff für alle linienförmigen textilen Gebilde zu verstehen, die durch Zusammendrehen von Fäden gleicher oder verschiedener Art entstanden sind. Der Begriff Faden soll im. Rahmen dieser Anmeldung alle linienförmigen Gebilde, wie Garne, Folienbändchen, schlauch- und bändchenförmige Textilien und dergleichen, umfassen. Zur Vereinfachung wird der Begriff des Fadens gleichbedeutend für die möglichen Alternativen im Rahmen dieser Anmeldung verwendet.

Beim Vierfachzwirnverfahren erhalten die Fäden vier Umdrehungen bei einer mechanischen Spindelumdrehung. Der Spulentopf mit der ungedrehten Garnvorlage wird durch Magnete in stationärer Position auf der sich drehenden Zwirnspindel gehalten. Die Fäden werden von der Vorlagespule abgezogen, außen um die Vorlagespule herumgeführt und treten in einen von zwei Rotoren ein. Die Fäden gelangen von dem ersten Rotor in den zweiten Rotor und werden, wenn sie aus dem zweiten Rotor wieder austreten, erneut um die Vorlagespule herumgeführt und schließlich aufgewickelt.

Da beide Rotoren in einander entgegengesetzte Richtungen rotieren, rotieren die Fäden um den Spulentopf und es entsteht ein erster innerer Fadenballon, bevor die Fäden in den ersten Rotor eintreten, und ein zweiter äußerer Fadenballon nach dem Verlassen des zweiten Rotors.

Weil die zu verzwirnenden Fäden in entgegengesetzten Richtungen zweimal um die Vorlagespule herumgeführt werden, erhalten sie bei einer Spindeldrehung vier Zwirndrehungen.

Durch die EP 0 863 234 A1 ist eine Vierfach-Zwirnmaschine offenbart, an der die Fäden von der Lieferspule zuerst nach oben abgezogen, um dann abwärts längs einer inneren Fadenbahn und durch eine Fadenführungsöffnung in den oberen Rotor geführt zu werden. Durch einen Fadenkanal gelangen die Fäden von dem oberen Rotor in den unteren Rotor. Aus dem unteren Rotor werden die Fäden dann aufwärts längs einer äußeren Fadenbahn zu der Aufwickelrolle geführt. Um die gegenläufige Drehrichtung der Rotoren zu erreichen, werden sowohl der obere als auch der untere Rotor jeweils einzeln von einem Riemenantrieb beaufschlagt.

Nachteil dieser Vierfach-Zwirnmaschine gemäß der EP 0 863 234 A1 ist, dass der Antrieb über zwei Antriebselemente mit den dazugehörigen Riemen und Riemenscheiben erfolgt; dadurch ist die Antriebskonstruktion aufwendig und benötigt relativ viel Platz.

Eine Vierfachdraht-Zwirnspindel für Zwirnmaschinen mit verbessertem Antrieb ist in der EP 1 726 693 A2 beschrieben. Anstelle der Verwendung von zwei Antriebselementen, die jeweils einen der Rotoren beaufschlagen, wird hier ein modifiziertes Planetengetriebe eingesetzt, wodurch nur noch ein Antrieb erforderlich ist. Dazu ist das Planetengetriebe so ausgebildet, dass ein inneres Element des Planetengetriebes mit dem unteren Rotor und ein äußeres Element des Planetengetriebes mit dem oberen Rotor ein Ganzes bildet. Das innere Element ist zudem mit Presspassung auf einer Welle angebracht, die motorisch angetrieben wird. Während das innere Element das Sonnenrad und das äußere Element das Hohlrad bilden, ist der Planetenträger gemäß der EP 1 726 693 A2 als ein Planetenträgerhalterelement respektive als Käfig ausgebildet, um die Planetenelemente in Form von Kugeln oder ähnlichen Formen aufzunehmen.

Wird die Welle, und damit auch das innere Element angetrieben, so dreht sich der untere Rotor und damit ebenfalls die Fadenausgangsöffnung des zweiten Fadenführungskanals. Da aufgrund des magnetfixierten Käfigs die Kugeln nicht um das innere Element rotieren können, rotieren die Kugeln stattdessen um sich selbst und übertragen so die Bewegung der angetriebenen Welle auf das äußere Element und damit auch auf den oberen Rotor, in den der Faden nach der Ausbildung des inneren Fadenballons durch den Fadenführungskanal gelangt.

Nachteilig an der Vierfachdraht-Zwirnspindel gemäß der EP 1 726 693 A2 ist, dass aufgrund des Übersetzungsverhältnisses die Geschwindigkeit der beiden gegenläufigen Rotoren immer unterschiedlich ist, wobei der untere Rotor die höhere Drehzahl aufweist und damit schneller dreht. Diese Drehzahldifferenz zwischen den Rotoren beeinträchtigt den eigentlichen Zwirnprozess, denn die Fadenballone weisen unterschiedliche Fadenspannungen auf, wobei der äußere und schnellere Fadenballon die höhere Fadenspannung aufweist. Die unterschiedlichen Fadenspannungen können zu unerwünschten Fadenbrüchen führen, die die Prozesssicherheit gefährden und letztendlich den Wirkungsgrad der Zwirnmaschine herabsetzen.

Ausgehend von Zwirnspindeln der vorgenannten Gattung liegt der vorliegenden Erfindung die Aufgabe zugrunde, eine Mehrfachdraht-Zwirnspindel für Zwirnmaschinen vorzuschlagen, mittels derer sowohl die Rotoren als auch die Fadenballone gleich schnell in einander entgegengesetzte Richtungen drehen.

Diese Aufgabe wird erfindungsgemäß durch die kennzeichnenden Merkmale des Anspruchs 1 gelöst.

Vorteilhafte Ausgestaltungen der Erfindung sind Gegenstand der Unteransprüche.

Zur Lösung der Aufgabe ist gemäß Anspruch 1 vorgesehen, dass die Übersetzung der Bewegung zwischen angetriebenem Rotor und abgetriebenem Rotor über mindestens ein Axiallager und mindestens ein Radiallager erfolgt und ein Käfig im Axiallager vorhanden ist, der gegen Rotation gesichert ist.

Aufgrund dieser konstruktiven Anordnung wird gewährleistet, dass beide Rotoren eine gegenläufige aber nahezu identische Geschwindigkeit aufweisen mit einem Übersetzungsverhältnis von *v́* gleich 1.

Während das Axiallager die Welle daran hindert, axiale Bewegungen ausführen zu können, verhindert das Radiallager Bewegungen der Welle in radialer Richtung. Über den Käfig des Axiallagers wird sichergestellt, dass die Kraft auf die Kugelreihen wirkt, wobei die Kugeln aufgrund des gesicherten Käfigs um sich selbst rotieren und so die Bewegung des angetriebenen Rotors in entgegengesetzter Richtung auf den abgetriebenen Rotor übertragen.

In Versuchen wurde festgestellt, dass es für den Zwirnprozess von Vorteil ist, wenn die gegenläufigen Rotoren eine weitestgehend gleiche Drehzahl aufweisen. Dies führt zu einer Angleichung der Ballonfadenspannung von innerem und äußerem Fadenballon, was sich wiederum vorteilhaft auf die Anzahl der Fadenbrüche auswirkt. Die Prozesssicherheit wird gesteigert und damit letztlich auch der Wirkungsgrad der Zwirnmaschine.

Wie in Anspruch 2 beschrieben, bilden in vorteilhafter Ausgestaltung der Erfindung das mindestens eine Axiallager und das mindestens eine Radiallager eine bauliche Einheit.

Werden Innenring und Außenring des Getriebes einstückig hergestellt, so kann das erfindungsgemäße Getriebe wesentlich einfacher und kostengünstiger hergestellt werden. Zudem bietet die einstückige Variante auch den Vorteil, dass sie leichter verbaubar ist.

Gemäß Anspruch 3 ist das Axiallager vorzugsweise ein Axialkugellager.

Axialkugellager ermöglichen axial sehr hoch belastbare, stoßunempfindliche und steife Lagerungen bei relativ geringem axialem Platzbedarf. Sie sind radial freigestellt und nehmen so ausschließlich axiale Belastungen auf.

Grundsätzlich sind Kugellager Lager, die Bewegungen von Bauteilen aufgrund einer Rollbewegung erleichtern und die Reibung verringern. Auf Kugeln, die in Käfigen geführt werden, rollen ein Außenring und ein Innenring aneinander vorbei. Die Käfige trennen die Kugeln, damit sie sich gegenseitig nicht berühren, denn sonst würden sich die Kugeln in ihrer Bewegung behindern.

Vorteile des Axialkugellagers sind das geringe Anlauf-Reibmoment, eine nahezu spielfreie Führung, ein geringer Schmiermittelbedarf, geringe Wartungsansprüche sowie eine lange Lebensdauer.

Das Axiallager kann, wie in Anspruch 4 dargelegt, ein Axialrollenlager sein.

Wie auch das Axialkugellager ermöglichen Axialrollenlager axial sehr hoch belastbare Lagerungen bei geringem axialem Platzbedarf. Axialrollenlager können verschiedene Wälzkörper aufweisen, zum Beispiel Zylinder oder Kegelrollen.

Gemäß Anspruch 5 ist das Radiallager bevorzugt ein Radialschrägkugellager.

Radiallager werden auch Querlager genannt und werden für Lagerkräfte senkrecht zur Wellenmittenachse eingesetzt. Ein Schrägkugellager hat in Richtung der Lagerachse gegeneinander versetzt angeordnete Laufbahnen im Innen- und Außenring. Schrägkugellager eignen sich bevorzugt für hohe Drehzahlen und eine hohe Laufgenauigkeit und weisen zudem eine hohe Fertigungsgenauigkeit auf.

Wie in Anspruch 6 beschrieben, ist das Radiallager ein Radialrollenlager.

Wie auch Radialkugellager bieten Radialrollenlager ebenfalls eine sehr hohe Tragfähigkeit bei Unempfindlichkeit gegenüber Schiefstellung von Welle und Gehäuse bei hohen Lasten. Radialrollenlager können verschiedene Wälzkörper aufweisen, zum Beispiel Zylinder oder Kegelrollen. Sie sind besonders vielseitig verwendbar, einfach aufgebaut und unempfindlich in Betrieb und Wartung. Radialrollenlager sind gut für hohe bis sehr hohe Drehzahlen geeignet.

Der Käfig des Axiallagers ist, gemäß Anspruch 7, mittels Magneten gegen Rotation gesichert.

Um zu gewährleisten, dass die Wälzkörper des Axiallagers um sich selbst rotieren und damit die Bewegung von dem angetriebenen Rotor auf den abgetriebenen Rotor übertragen, muss der Käfig gegen ein Mitlaufen gesichert werden. Vorzugsweise geschieht dies mittels Magneten, da dadurch eine berührungslose Konstruktion realisiert werden kann.

Wie in Anspruch 8 offenbart, ist das Getriebe mit einer definierten Belastung voreingestellt.

Um zu gewährleisten, dass eine zuverlässige Übertragung der Bewegung von dem angetriebenem auf das abgetriebene Getriebeelement stattfindet, erfolgt über die Einstellung des Radiallagers eine definierte Belastung des Getriebes.

In einer bevorzugten Ausgestaltung, wie in Anspruch 9 beschrieben, ist ein ringförmiger Magnethalter vorhanden, dessen Innendurchmesser so gestaltet ist, dass eine Fangrille gegen einziehende Fäden entsteht.

Wird am Innendurchmesser des Magnethalters der Rand aufgebördelt, das heißt, vom Rand her aufgebogen, so entsteht im unteren Bereich der Mehrfachdraht-Zwirnspindel eine Fangrinne, die zuverlässig verhindert, dass Fäden oder Fadenenden, zum Beispiel nach einem Fadenbruch, eingezogen werden und sich in der Mehrfachdraht-Zwirnspindel ansammeln, oder in das Planetengetriebe gelangen.

Im Folgenden wird die Erfindung anhand eines Ausführungsbeispiels unter Bezugnahme auf die begleitenden Zeichnungen näher erläutert.

Die Zeichnungen zeigen:
- Figur 1: eine erfindungsgemäße Mehrfachdraht-Zwirnspindel;
- Figur 2: eine vereinfachte und vergrößerte Darstellung des erfindungsgemäßen Getriebes.

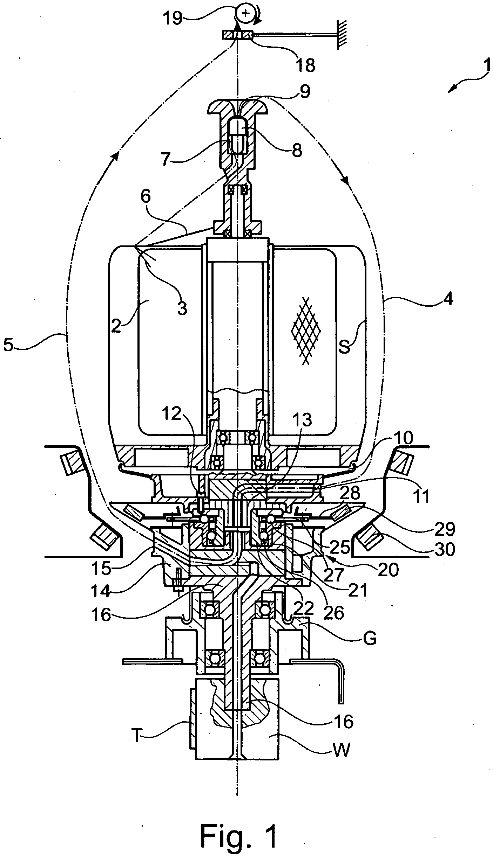

Figur 1 zeigt eine erfindungsgemäße Mehrfachdraht-Zwirnspindel 1. Von einer Vorlagespule 2 werden die gefachten Fäden 3 abgezogen und durch den drehbar gelagerten Zwirnflügel 6 zum Bremsbereich 7 geführt. Nach der Vorbremsung durch die Kapselbremse 8 verlassen die Fäden 3 über den oberen Rundkopf 9 den Zwirnflügel 6, um als innerer Fadenballon 4 um den stehenden Spulentopf S zum oberen Rotor 10 geführt zu werden.

Dort treten die Fäden 3 in den oberen Fadenkanal 11 des oberen Rotors 10 ein, um im Zentrum der Mehrfachdraht-Zwirnspindel 1 über eine Umlenkung zum unteren Rotor 14 geführt zu werden. Über den im unteren Rotor 14 befindlichen unteren Fadenkanal 15 werden die Fäden 3 wiederum umgelenkt und dann als äußerer Fadenballon 5 sowohl um den Spulentopf S als auch um den inneren Fadenballon 4 nach oben geführt.

Oberhalb der Mehrfachdraht-Zwirnspindel 1 werden die Fäden 3, nunmehr mit Zwirnumdrehungen, vom Ballonfadenführer 18 zur Aufwicklung 19 geführt.

Während ihrer Passage durch den oberen Rotor 10 und den unteren Rotor 14 werden den Fäden Drehungen mitgegeben, da der obere Rotor 10 und der untere Rotor 14, bedingt durch die Wirkung des erfindungsgemäßen Getriebes 20, gegenläufig angetrieben werden.

Die zu verzwirnenden Fäden 3 werden in entgegengesetzter Richtung insgesamt zweimal um die Vorlagespule 2 herumgeführt und erhalten auf diese Weise vier Zwirndrehungen bei einer Spindeldrehung.

Der Antrieb erfolgt, wie in Figur 1 dargestellt, über einen Tangentialriemen T der über den Wirtel W die untere Rotorwelle 16, welche im Gehäuse G gelagert ist, antreibt. Im oberen Teil der unteren Rotorwelle 16 ist der Außenring 21 des Getriebes 20 mit demselben kraftschlüssig über eine Presspassung verbunden. Der Innenring 22 des Getriebes 20 ist formschlüssig über Schrauben 12 mit der oberen Rotorwelle 13 fixiert. Der derart mit dem Getriebe 20 verbundene obere Rotor 10 und untere Rotor 14 sind im angetriebenen Zustand gegenläufig, mit einem der Erfindung entsprechendem Übersetzungsverhältnis von *v́* = 1, wobei *v́* durch den Quotienten aus Antriebsdrehzahl und Abtriebsdrehzahl gebildet wird.

Damit sich eine gegenläufige Drehung des oberen Rotors 10 und unteren Rotors 14 einstellt, muss ein Gegenmoment M für das Getriebe 20 vorhanden sein. Dies wird erfindungsgemäß über den Käfig 25 des Axialkugellagers 27 in radialer Richtung erzeugt. Der nach außen in radialer Richtung vergrößerte Käfig 25 ist mit einem ringförmigen Magnetträger 28 verbunden, welcher das Gegenmoment M über den Magneten 29 zum äußeren stationären Magneten 30 erstellt. Der Abschnitt des zwischen dem Magneten 29 sowie dem stationären Magneten 30 drehenden unteren Rotors 14 ist in diesem Bereich aus antimagnetischem Material gefertigt, um Wirbelstromeffekte zu vermeiden.

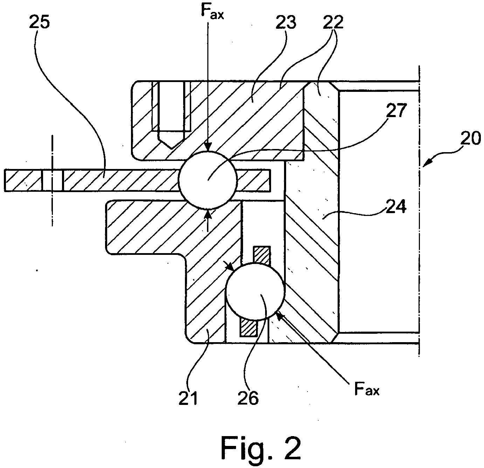

Anhand Figur 2 wird deutlich, dass das Getriebe 20 neben dem Axialkugellager 27 zusätzlich über ein Schrägkugellager 26 zur Stabilisierung des Getriebes 20 verfügt.

Der Innenring 22 des Getriebes 20 ist zweigeteilt, und zwar in eine obere, dem Axialkugellager 27 zuzuordnende Scheibe 23, und eine dem Schrägkugellager 26 zuzuordnende Buchse 24. Die Scheibe 23 und die Buchse 24 werden derart miteinander verpresst, dass eine bleibende Kraft F auf die beiden Kugelreihen wirkt und damit den Mitnahmeeffekt im Getriebe 20 bewirkt. Die bleibende Kraft F ist nach den Gesetzmäßigkeiten der Hertzschen Pressung ausgelegt.

## Patentansprüche

1. Mehrfachdraht-Zwirnspindel (1) für Zwirnmaschinen mit einem oberen Rotor (10) und einem unteren Rotor (14), die sich konzentrisch in einander entgegengesetzte Richtungen drehen, wobei einer der Rotoren (10, 14) angetrieben wird und die Bewegung mittels eines Getriebes (20) auf den anderen Rotor (10, 14) übertragen wird,
**dadurch gekennzeichnet,**
**dass** die Übersetzung der Bewegung zwischen angetriebenem Rotor (10, 14) und abgetriebenem Rotor (10,14) über mindestens ein Axiallager (27) und mindestens ein Radiallager (26) erfolgt und ein Käfig (25) im Axiallager (27) vorhanden ist, der gegen Rotation gesichert ist.

2. Mehrfachdraht-Zwirnspindel (1) nach Anspruch 1, **dadurch gekennzeichnet, dass** das mindestens eine Axiallager (27) und das mindestens eine Radiallager (26) eine bauliche Einheit bilden.

3. Mehrfachdraht-Zwirnspindel (1) nach Anspruch 1, **dadurch gekennzeichnet, dass** das Axiallager (27) ein Axialkugellager ist.

4. Mehrfachdraht-Zwirnspindel (1) nach Anspruch 1, **dadurch gekennzeichnet, dass** das Axiallager (27) ein Axialrollenlager ist.

5. Mehrfachdraht-Zwirnspindel (1) nach Anspruch 1, **dadurch gekennzeichnet, dass** das Radiallager (26) ein Radialschrägkugellager ist.

6. Mehrfachdraht-Zwirnspindel (1) nach Anspruch 1, **dadurch gekennzeichnet, dass** das Radiallager (26) ein Radialrollenlager ist.

7. Mehrfachdraht-Zwirnspindel (1) nach Anspruch 2, **dadurch gekennzeichnet, dass** der Käfig (25) des Axiallagers (27) mittels Magneten (29, 30) gegen Rotation gesichert ist.

8. Mehrfachdraht-Zwirnspindel (1) nach Anspruch 1, **dadurch gekennzeichnet, dass** das Getriebe (20) mit einer definierten Belastung voreingestellt ist.

9. Mehrfachdraht-Zwirnspindel (1) nach Anspruch 1, **dadurch gekennzeichnet, dass** ein ringförmiger Magnethalter (28) vorhanden ist, dessen Innendurchmesser so gestaltet ist, dass eine Fangrille gegen einziehende Fäden entsteht.
